# EUROPEAN PATENT SPECIFICATION

(11) **EP 2 440 450 B1**
(45) Date of publication and mention of the grant of the patent: **30.03.2022**
(21) Application number: 10786436.5
(22) Date of filing: 09.06.2010
(51) Int. Cl.: B63J 4/00, B63B 13/00, C02F 1/00

(54) **CLEANING UNIT FOR CLEANING OF A BALLAST WATER TREATMENT SYSTEM, BALLAST WATER TREATMENT SYSTEM AND USE OF SUCH A SYSTEM.**
REINIGUNGSEINHEIT ZUM REINIGEN EINES ABWASSERBEHANDLUNGSSYSTEMS, ABWASSERBEHANDLUNGSSYSTEM UND VERWENDUNG EINES SOLCHEN SYSTEMS
UNITÉ DE NETTOYAGE CONÇUE POUR NETTOYER UN SYSTÈME DE TRAITEMENT D EAU DE BALLASTAGE, SYSTÈME DE TRAITEMENT D EAU DE BALLASTAGE ET UTILISATION D UN TEL SYSTÈME

(30) Priority: 09.06.2009 SE 0900788
(43) Date of publication of application: 18.04.2012
(73) Proprietor: AlfaWall Aktiebolag, 147 41 Tumba (SE)
(72) Inventor: BERG, Magnus, S-128 69 Sköndal (SE); MARKSTEDT, Johan, S-123 56 Farsta (SE); ERIKSSON, Emil, S-118 42 Stockholm (SE)
(74) Representative: Alfa Laval Attorneys
(86) International application number: PCT/SE2010/000160
(87) International publication number: WO 2010/144019

(56) References cited:
- WO-A1-2006/061583
- WO-A1-2007/032577
- WO-A1-2009/060813
- WO-A1-2010/002351
- WO-A2-2008/039147
- WO-A2-2008/039147
- CN-Y- 2 668 605
- DE-A1-102005 044 827
- SE-C2- 535 138
- SE-L- 0 602 007
- US-A1- 2004 026 336
- US-A1- 2005 023 482
- US-A1- 2008 017 586
- US-A1- 2008 203 004
- US-A1- 2008 283 467
- US-A1- 2008 283 467
- DATABASE WPI Week 200055, Derwent Publications Ltd., London, GB; AN 2000-581749, XP003026986 & JP 2000 189953 A (TOSHIBA LIGHTECH KK) 11 July 2000

## Description

### FIELD OF THE INVENTION

The present invention relates to a ballast water treatment system comprising a filter, at least one liquid treating chemical and/or photocatalytic reactor and a cleaning unit.

### TECHNICAL BACKGROUND

In the shipping industry transporting large quantities of water in the form of ballast water in ships from one corner of the world to another with different biological environments has proved to provide a huge problem. Thus transporting species of both flora and fauna belonging to one environment and by accident planting it in a new environment may thus knock out the local species or causing damage to them by transferring diseases. Therefore international conventions put demands on all commercial ships that they have to be equipped with systems for cleaning ballast water. For treating ballast water in ships, it is thus very important that no water is leaving the ship untreated in connection with the deballasting. The system should be controlled and monitored so that a safe and optimal function is obtained.

There are previously known systems based on treating and purifying water with chemicals such as chloride. In order to reduce the negative impact such chemicals have on the environment, systems have been developed not using chemicals but other effects in order to kill the unwanted organisms in the water. Such a method is treating the water with an oxidant like ozone. Combining ozone treatment with the use of e.g. oxygen, hydroperoxide and UV radiation has proved to be even more effective. Another method is to treat ozone with UV-light in order to break down the ozone and create radicals which are even more aggressive decomposing organisms in the ballast water.

Such a system may comprise piping leading sea water to at least one filter means for filtering out solids in the incoming sea water, and at least one treatment unit (also called reactor) for treating said sea water for use as ballast water, and said system could also comprise necessary valve and pump means for controlling the flow through said piping and a control unit for controlling the process.

Due to the character of the sea water with potentially environment damaging contents it is highly desirable that not only the filter but also the treatment unit and the piping should be cleaned after each ballast water operation. Certain operational parts of the reactor need to be clean to function satisfactory.

Thus, such systems are connected to a cleaning unit (CIP unit or cleaning in place unit). The CIP unit circulates a biodegradable solution (CIP liquid cleaning media) through the treatment unit to remove ballast water scaling. As the ballast water is salt containing sea water it is important to take measures against corrosion in the system. Thus, the cleaning process also comprises flushing the filter and reactor with fresh water before and after the cleaning with the CIP cleaning media and draining the treatment unit of the different liquids after each step.

The flushing of the filter also has the effect that the ballast water in the filter is diluted to prevent that organisms survive in the filter and multiply to block the filter.

Due to the limited provisions of space aboard a ship it is highly desirable to produce compact solutions in every operational system of the ship to maximize its carrying capacity. One problem or limitation with the previously known solutions is that without extensive adaptions, the CIP unit has to be placed below the treatment unit, often on a deck below, in order to make it possible to drain CIP medium from the reactor back to a tank in the CIP unit. An example of a known system, in which CIP unit is placed below the treatment unit is shown by WO 2008/039147 A2.

Another problem is that previous systems have been space consuming involving a plurality of connections between units within the system and between the system and the environment.

### SUMMARY OF THE INVENTION

An aim of the present invention is to reduce the disadvantages of the prior art mentioned above.

This and other aims are achieved, according to the present invention as defined in the appended claims. The invention thus relates to a ballast water treatment system comprising a filter, at least one liquid treating chemical and/or photocatalytic reactor and a cleaning unit. The reactor is connected to a ballast water inlet pipe comprising a closable valve and wherein a ballast pump is arranged to pump sea water or water from rivers or lakes to the inlet pipe, and the filter is arranged before the reactor to remove particles during ballasting. The treated ballast water is directed to a ballast tank via a pipe. Said cleaning unit comprises a tank for liquid cleaning medium, a circulation means circulating liquid cleaning medium from said tank via an outlet pipe to said reactor and back to said tank via a return pipe during cleaning of the system. The cleaning unit also comprises a drain removal pump adapted to drain said reactor of liquid cleaning medium after said cleaning of the reactor and adapted to return the liquid cleaning medium back from the reactor to the cleaning unit after said cleaning of the reactor. The cleaning unit is placed on the same level or above the reactor.

In another embodiment of the present invention, said circulation means is a circulation pump and fed from the bottom of the tank.

In yet another embodiment of the present invention, said circulation pump and said drain removal pump are driven by compressed air.

In another embodiment of the present invention, said pumps are membrane pumps.

In yet another embodiment of the present invention, at least the surfaces subjected to ballast water and/or cleaning medium in said tank, said pipes and said pumps are made of non-corrosive materials, e.g. polymeric materials.

In another embodiment of this aspect of the present invention, said drain removal pump is adapted to drain said reactor of ballast water before the cleaning of the system.

In another embodiment of the present invention, said drain removal pump is adapted to drain said reactor of fresh water which the reactor has been filled with before and after the cleaning of the system.

In another embodiment of the present invention, the cleaning unit comprises valves for regulating filling of said reactor with fresh water supplied from a fresh water source.

In another embodiment of the present invention, the cleaning unit comprises a vent valve adapted to open when said reactor is to be drained and then aerating said return pipe.

In another embodiment of the present invention, the cleaning of the system is monitored by using liquid level sensors, only in said reactor.

Other aspects and advantages of the invention will, with reference to the accompanying drawings, be presented in the following detailed description of embodiments of the invention.

### BRIEF DESCRIPTION OF THE DRAWING

Fig. 1 discloses a schematic figure of a system for treating ballast water to which a cleaning unit according to the present invention is attached.
Fig. 2 discloses a perspective view of a cleaning unit according to the present invention.

### DESCRIPTION OF PREFERRED EMBODIMENTS OF THE

### INVENTION

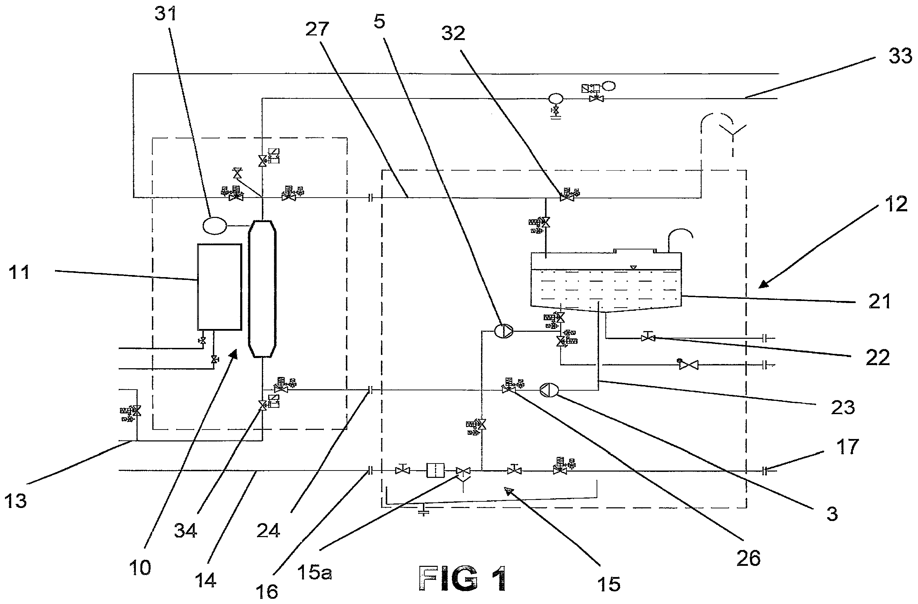

In fig.1 is an example of a system for treating ballast water schematically depicted. The system comprises a liquid treating unit or reactor 10 which reactor involves chemical processes such as oxidizing using ozone, oxygen or hydroperoxide or photolytic processes such as radiation with UV-light from a lamp drive cabinet 11 or a combination of oxidizing with chemicals and photolytic processes. In fig. 1 the reactor 10 is disclosed with the lamp drive cabinet (LDC) 11. The system also comprises a filter (not shown) for removing larger particles during ballasting and a cleaning unit 12 for cleaning the system after the ballasting and the deballasting. The filter is not used during deballasting.

The reactor 10 is connected to a ballast water inlet pipe 13 into which a ballast pump (not shown) pumps the ballast water, which comprises sea water or water from rivers or lakes. However, before that, the ballast water has passed through the filter which has removed the larger particles from the ballast water. In the reactor 10 the treating processes takes place and during these processes deposits of particles, e.g. dead organisms and slam (so called scaling) appear in the reactor on operational surfaces as well as in the piping. It is therefore essential that the system is cleaned after each ballast water treating process. The treated ballast water which has streamed through the reactor is directed to a ballast tank via pipe 33.

When the ballasting has been performed the inlet pipe 13 is closed by valve 34 and the reactor 10 is drained of ballast water by a drain removal pump 5. The drained ballast water is directed back to the sea. The filter is also back-flushed with fresh water from a fresh water source via a fresh water inlet pipe 14 to remove the filtrated larger particles stuck in the filter. The flushing of the filter is initiated when a differential pressure sensor indicates that the flow through the filter is reduced. The back flushed water is directed back to the sea. This is performed frequently, at least every 15 minutes and always when the system is shut down. Thus, it is guaranteed that the back flushed water is not dumped in another zone or biotope. Instead of fresh water from a fresh water source already filtrated ballast water may be used to flush the filter.

Fresh water led in the fresh water inlet pipe 14 is also used to fill the reactor 10 after the cleaning process. The flushing of the filter and the filling of the reactor 10 after the cleaning is regulated by fresh water valves 15, 15a which direct the water to the reactor 10 or the filter. The fresh water valves 15, 15a are incorporated in the cleaning unit 12 to reduce the space needed. One of the fresh water valves situated in the fresh water inlet pipe 14 leading from the fresh water inlet and incorporated in the cleaning unit 12 is a back flow preventer valve 15a preventing contaminated water flowing back through the fresh water inlet pipe 14. There are also flanged connections 16, 17 in the cleaning unit for connecting the fresh water valves 15, 15a to the fresh water inlet pipe 14 and to the filter. The fresh water valves 15 may be made of stainless steel, or other corrosion resistant metal, alloy or material.

When the reactor 10 has been drained, i.e. after each ballast water treating process, the reactor 10 with the lamp drive cabinet 11 is cleaned. This is done by the cleaning unit 12 by pumping a biodegradable cleaning medium into the reactor 10 and letting it circulate for a predetermined period of time or until certain requirements of cleanness has been fulfilled. Instead of using a pump it would be possible to pressurize the reactor 10 by a circulation means and use this pressure to circulate the cleaning medium.

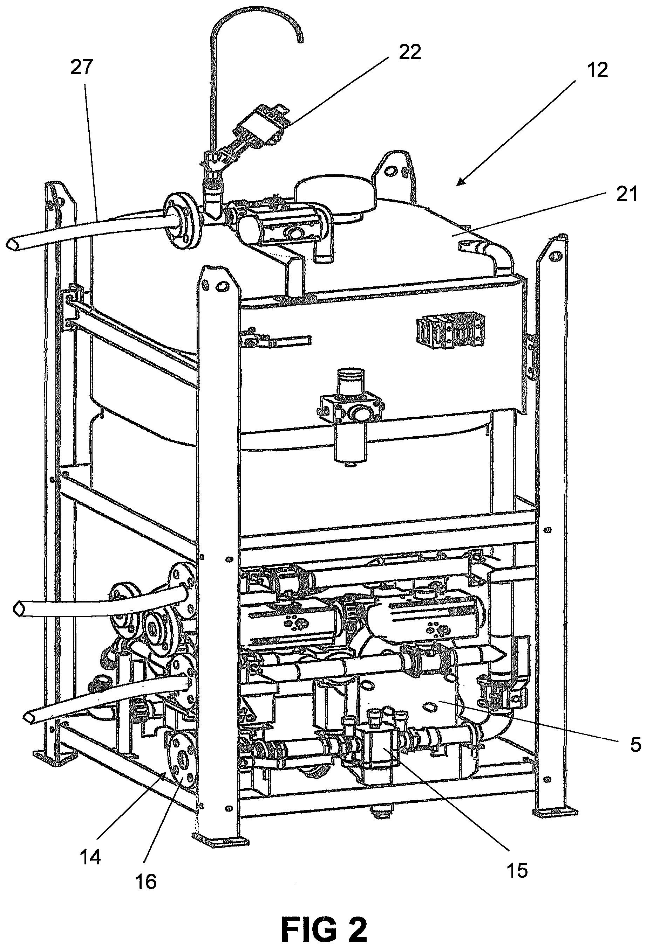

According to the embodiment of the cleaning unit shown in figs. 1 and 2, the cleaning unit 12 comprises a tank 21 in which the CIP liquid cleaning medium is stored. During a cleaning process the CIP medium is brought by a circulation pump 3 to circulate from the tank 21 to the reactor 10 and back to the tank. An outlet pipe 23 from the tank 21 with a flanged connection 24 for connecting the outlet pipe 23 to the reactor 10 is arranged at the bottom of the tank 21 feeding the circulation pump 3 and a closing valve 26 downstream of the pump 3 opens during the cleaning process. The outlet pipe 23 and the closing valve 26 is also manufactured of a polymer material to avoid corrosion. The circulation pump 3 is used for circulating CIP media to the reactor 10 (or if there are more than one, the reactors one at a time sequentially) when the cleaning of the reactor 10 is started and the reactor 10 with the lamp drive cabinet 11 is thus flushed with CIP medium from the tank 21.

A return pipe 27 directs the CIP medium from the top of the reactor 10 back to the top of the tank 21. Said return pipe 27 is selectably aerated by a vent valve 32 arranged in the cleaning unit 12, in order to avoid that an under pressure appear in the reactor 10. During the cleaning process when the CIP medium is circulated the vent valve 32 is closed.

For controlling the cleaning process the tank 21 of the cleaning unit 12 is not equipped with sensors of its own, but instead an existing liquid level sensor 31 at the top of the reactor 10 signals if the level is too low which is a sign that the circulation of the CIP medium is not functioning. The same level sensor 31 controls the level of fresh water when the reactor 10 is filled up again after the cleaning process.

The CIP medium is totally biodegradable and thus environmental friendly and may be evacuated to a suitable place, e.g. overboard or a tank. For this purpose the tank 21 is equipped with a draining valve 22 at the bottom of the tank 21. The tank 21 and the draining valve 22 are manufactured of a polymer material to reduce the corrosion problems. The tank 21 may e.g. be manufactured of PE plastic.

To avoid corrosion problems at least the surfaces subjected to ballast water and/or cleaning medium in said tank 2, said pipes 13, 27 and said pumps 3, 5 may be made of non-corrosive materials, e.g. polymeric materials.

As previously has been described the cleaning unit 12 also comprises a drain removal pump 5 which before the cleaning process drains the reactor 10 of ballast water and rinsing fresh water. The drain removal pump 5 is also used to return the CIP media back from the reactor 10 to the cleaning unit 12 after said cleaning of the system. Previous systems have not comprised such a pump with the effect that the cleaning unit 12 has been forced to be situated below the reactors 10 to obtain a circulating pressure due to gravitation. The incorporated drain removal pump 5 makes it possible to place the cleaning unit 12 on the same level or deck as the reactors 10 or even above the same. Being able to collect these components together is a great benefit when it comes to saving space which is essential aboard a ship. Both said circulation pump 3 and said drain removal pump 5 may be driven by pressurized gas, e.g. compressed air. The pumps 3, 5 may be membrane pumps.

The drain removal pump 5 is also adapted to drain said reactor 10 of fresh water which the reactor 10 has been filled with before and after the cleaning of the system.

The above detailed description is not limited to the mentioned embodiments but to a person skilled in the art there are several modifications possible within the scope of the appended claims.

## Claims

1. Ballast water treatment system comprising a filter, at least one liquid treating chemical and/or photocatalytic reactor (10) and a cleaning unit (12), wherein the reactor (10) is connected to a ballast water inlet pipe (13) comprising a closable valve (34) and wherein a ballast pump is arranged to pump sea water or water from rivers or lakes to the inlet pipe (13), and the filter is arranged before the reactor (10) to remove particles during ballasting, and wherein the treated ballast water is directed to a ballast tank via a pipe (33), the cleaning unit (12) comprising a tank (21) for a liquid cleaning medium, a circulation means to circulate liquid cleaning medium from said tank (21) via an outlet pipe (23) to said reactor (10) and back to said tank (21) via a return pipe (27) during cleaning of the reactor (10), **characterized by** the cleaning unit (12) further comprising a drain removal pump (5) adapted to drain said reactor (10) of the liquid cleaning medium after said cleaning of the reactor (10) and adapted to return the liquid cleaning medium back from the reactor (10) to the cleaning unit (12) after said cleaning of the reactor (10), and wherein the cleaning unit (12) is placed on the same level or above the reactor (10).

2. Ballast water treatment system according to claim 1, wherein said circulation means is a circulation pump (3) adapted to be fed from the bottom of the tank (21).

3. Ballast water treatment system according to claim 1 or 2, wherein said circulation pump (3) and said drain removal pump (5) are driven by compressed air.

4. Ballast water treatment system according to any one of claims 2-3, wherein said pumps (3, 5) are membrane pumps.

5. Ballast water treatment system according to any one of claims 2-4, wherein at least the surfaces subjected to ballast water and/or cleaning medium in said tank (21), said pipes (23, 27) and said pumps (3, 5) are coated with or made of non-corrosive materials, e.g. polymeric materials.

6. Ballast water treatment system according to any one of the preceding claims, wherein said drain removal pump (5) is adapted to drain said reactor (10) of ballast water before the cleaning of the reactor (10).

7. Ballast water treatment system according to any one of the preceding claims, wherein said drain removal pump (5) is adapted to drain said reactor (10) of fresh water which the reactor has been filled with before and after the cleaning of the reactor (10).

8. Ballast water treatment system according to any one of the preceding claims, comprising valves (15) for regulating filling of said reactor (10) with fresh water supplied from a fresh water source.

9. Ballast water treatment system according to any one of the preceding claims, comprising a vent valve (32) adapted to open when said reactor (10) is to be drained and then to aerate said return pipe (27).

10. Ballast water treatment system according to any one of the preceding claims, wherein the cleaning of the system is monitored by using liquid level sensors, only in said reactor (10).

## Patentansprüche

1. Ballastwasser-Behandlungsanlage, die einen Filter, mindestens einen chemischen und/oder photokatalytischen Flüssigkeitsbehandlungsreaktor (10) und eine Reinigungseinheit (12) umfasst, wobei der Reaktor (10) mit einem Ballastwasser-Einlassrohr (13) verbunden ist, das ein schließbares Ventil (34) umfasst, und wobei eine Ballastpumpe angeordnet ist, um Meerwasser oder Wasser aus Flüssen oder Seen in das Einlassrohr (13) zu pumpen, und der Filter vor dem Reaktor (10) angeordnet ist, um während des Ballastladens Teilchen zu entfernen, und wobei das behandelte Ballastwasser über ein Rohr (33) zu einem Ballasttank geleitet wird, wobei die Reinigungseinheit (12) einen Tank (21) für ein flüssiges Reinigungsmittel, ein Umwälzmittel, um flüssiges Reinigungsmittel während des Reinigens des Reaktors (10) von dem Tank (21) über ein Auslassrohr (23) zu dem Reaktor (10) und über ein Rücklaufrohr (27) zurück zu dem Tank (21) umzuwälzen, umfasst, **dadurch gekennzeichnet, dass** die Reinigungseinheit (12) ferner eine Ablaufentfernungspumpe (5) umfasst, die angepasst ist, um nach dem Reinigen des Reaktors (10) den Reaktor (10) von dem flüssigen Reinigungsmittel zu entleeren, und angepasst ist, nach dem Reinigen des Reaktors (10) das flüssige Reinigungsmittel wieder von dem Reaktor (10) zu der Reinigungseinheit (12) zurückzuführen, und wobei die Reinigungseinheit (12) auf der gleichen Ebene oder oberhalb des Reaktors (10) platziert ist.

2. Ballastwasser-Behandlungsanlage nach Anspruch 1, wobei das Umwälzmittel eine Umwälzpumpe (3) ist, die angepasst ist, um von dem Boden des Tanks (21) aus gespeist zu werden.

3. Ballastwasser-Behandlungsanlage nach Anspruch 1 oder 2, wobei die Umwälzpumpe (3) und die Ablaufentfernungspumpe (5) durch Druckluft angetrieben werden.

4. Ballastwasser-Behandlungsanlage nach einem der Ansprüche 2 bis 3, wobei die Pumpen (3, 5) Membranpumpen sind.

5. Ballastwasser-Behandlungsanlage nach einem der Ansprüche 2 bis 4, wobei mindestens die Oberflächen, die Ballastwasser und/oder Reinigungsmittel in dem Tank (21), den Rohren (23, 27) und den Pumpen (3, 5) ausgesetzt sind, mit nicht korrodierenden Materialien, z. B. Polymermaterialien, beschichtet oder aus denselben hergestellt sind.

6. Ballastwasser-Behandlungsanlage nach einem der vorhergehenden Ansprüche, wobei die Ablaufentfernungspumpe (5) angepasst ist, um vor dem Reinigen des Reaktors (10) den Reaktor (10) von Ballastwasser zu entleeren.

7. Ballastwasser-Behandlungsanlage nach einem der vorhergehenden Ansprüche, wobei die Ablaufentfernungspumpe (5) angepasst ist, um vor und nach dem Reinigen des Reaktors (10) den Reaktor (10) von frischem Wasser, mit dem der Reaktor gefüllt worden ist, zu entleeren.

8. Ballastwasser-Behandlungsanlage nach einem der vorhergehenden Ansprüche, die Ventile (15) zum Regulieren des Füllens des Reaktors (10) mit frischem Wasser, das aus einer Frischwasserquelle zugeführt wird, umfasst.

9. Ballastwasser-Behandlungsanlage nach einem der vorhergehenden Ansprüche, die ein Lüftungsventil (32) umfasst, das angepasst ist, um sich zu öffnen, wenn der Reaktor (10) entleert werden soll, und dann das Rücklaufrohr (27) zu lüften.

10. Ballastwasser-Behandlungsanlage nach einem der vorhergehenden Ansprüche, wobei die Reinigung der Anlage durch Verwendung von Flüssigkeitsstandsensoren, nur in dem Reaktor (10), überwacht wird.

## Revendications

1. Système de traitement d'eau de lest comprenant un filtre, au moins un réacteur (10) chimique et/ou photocatalytique de traitement de liquide et une unité de nettoyage (12), dans lequel le réacteur (10) est raccordé à un tuyau d'entrée (13) d'eau de lest comprenant une vanne pouvant être fermée (34) et dans lequel une pompe de lest est agencée pour pomper de l'eau de mer ou de l'eau de rivières ou de lacs vers le tuyau d'entrée (13), et le filtre est disposé avant le réacteur (10) pour retirer des particules lors du lest, et dans lequel l'eau de lest traitée est dirigée vers un réservoir de lest *via* un tuyau (33), l'unité de nettoyage (12) comprenant un réservoir (21) pour un agent de nettoyage liquide, un moyen de circulation pour faire circuler de l'agent de nettoyage liquide depuis ledit réservoir (21) *via* un tuyau de sortie (23) vers ledit réacteur (10) et en retour vers ledit réservoir (21) *via* un tuyau de retour (27) lors du nettoyage du réacteur (10), **caractérisé par le fait que** l'unité de nettoyage (12) comprend en outre une pompe de vidange (5) adaptée pour drainer ledit réacteur (10) de l'agent de nettoyage liquide après ledit nettoyage du réacteur (10) et adaptée pour renvoyer l'agent de nettoyage liquide depuis le réacteur (10) vers l'unité de nettoyage (12) après ledit nettoyage du réacteur (10), et dans lequel l'unité de nettoyage (12) est placée au même niveau ou au-dessus du réacteur (10).

2. Système de traitement d'eau de lest selon la revendication 1, dans lequel ledit moyen de circulation est une pompe de circulation (3) adaptée pour être alimentée depuis le fond du réservoir (21).

3. Système de traitement d'eau de lest selon la revendication 1 ou 2, dans lequel ladite pompe de circulation (3) et ladite pompe de vidange (5) sont entraînées par de l'air comprimé.

4. Système de traitement d'eau de lest selon l'une quelconque des revendications 2 à 3, dans lequel lesdites pompes (3, 5) sont des pompes à membrane.

5. Système de traitement d'eau de lest selon l'une quelconque des revendications 2 à 4, dans lequel au moins les surfaces soumises à l'eau de lest et/ou à l'agent de nettoyage dans ledit réservoir (21), lesdits tuyaux (23, 27) et lesdites pompes (3, 5) sont revêtues, ou constituées, de matériaux non corrosifs, par exemple de matériaux polymères.

6. Système de traitement d'eau de lest selon l'une quelconque des revendications précédentes, dans lequel ladite pompe de vidange (5) est adaptée pour drainer ledit réacteur (10) de l'eau de lest avant le nettoyage du réacteur (10).

7. Système de traitement d'eau de lest selon l'une quelconque des revendications précédentes, dans lequel ladite pompe de vidange (5) est adaptée pour drainer ledit réacteur (10) de l'eau douce, dont le réacteur a été rempli, avant et après le nettoyage du réacteur (10).

8. Système de traitement d'eau de lest selon l'une quelconque des revendications précédentes, comprenant des vannes (15) pour la régulation du remplissage dudit réacteur (10) avec de l'eau douce alimentée depuis une source d'eau douce.

9. Système de traitement d'eau de lest selon l'une quelconque des revendications précédentes, comprenant une vanne de purge (32) adaptée pour s'ouvrir lorsque ledit réacteur (10) doit être drainé et ensuite pour aérer ledit tuyau de retour (27).

10. Système de traitement d'eau de lest selon l'une quelconque des revendications précédentes, dans lequel le nettoyage du système est surveillé en utilisant des capteurs de niveau de liquide, seulement dans ledit réacteur (10).
